# EUROPEAN PATENT APPLICATION

(11) **EP 3 753 866 A1**
(43) Date of publication of application: **23.12.2020**
(21) Application number: 20180262.6
(22) Date of filing: 16.06.2020
(51) Int. Cl.: B65F 1/16

(54) **OPERATING MECHANISM FOR OPENING AND CLOSING A CONTAINER LID**

(30) Priority: 20.06.2019 SE 1950768
(71) Applicant: PeLift AB, Åled (SE)
(72) Inventor: Persson, Emil, 313 95 Åled (SE)
(74) Representative: Bergenstråhle Group AB

(57) **Abstract**

An operating mechanism (1), for opening and closing a container lid (35), comprising a telescopic member (10) with a first tube (11) and a second tube (12) telescopically displaceable relative the first tube (11) between a retracted and an extended position, a rotatable threaded rod (2) arranged inside the first tube (11) and connected to the second tube (12) by a threaded engagement (3), wherein the second tube (12) is movable along the rod (2) upon rotation of the rod (2), a drive unit (4) arranged to rotate the rod (2), and a first spring (5) arranged inside the first tube (11) and extending between a first support (13) of the second tube (12) and a second support (20) arranged at a lower end (11a) of the first tube (11), wherein the spring (5) is arranged to be compressed when the second tube (12) moves along the rod (2) towards the retracted position of the telescopic member (10).

## Description

### Technical field

The invention considers an operating mechanism for opening and closing of a container lid, preferably related to the field of waste handling containers and especially containers having a large and heavy lid.

### Background art

Containers, especially for waste handling for purposes like recycling or waste collecting of materials like construction material etc., which have an open top, may have a need of a cover such as a container lid or the like. The reasons for this are for example due to safety reasons, theft prevention, transport reasons or other reasons. For example at recycling plants, material like paper, plastic, glass, metal, electronics, etc. are handled. At these facilities, there is sometimes problem with people climbing into the containers, often when they are unattended, to steal attractive material such as metal, copper, electronics or other stuff, and the climbing into containers is dangerous and might lead to severe injuries. For this reason and of course for transport reasons, regulations have forced the use of container covers or lids. The containers are normally big, why the lid covering the open top of the container has great dimensions and is by that heavy to handle. Prior art solutions regarding operating mechanisms for opening and closing a container lids concern for example hand- or foot operated jacks or motor driven jacks, normally with a serrated rack/shaft, where a rotational motion by a jack handle or the like is transferred to a linear motion of the rack (shaft). The lid is normally pivotally attached to the short side walls (gables) of the container near the back wall and the operating mechanism is attach at one of the gables. The jack handle (or another drive unit) may for example be arranged at the gable and then directly coupled to a gear for transferring the rotating motion to the linear motion. If the jack handle or the like is arranged at for example the front or the back wall of the container, some kind of transferring mechanism is attached to the gear. The linear motion of the rack pushes the lid upwards or downwards depending on the rotation direction, whereby the lid pivots around a pivoting point (shaft) and opens/closes the lid on the open top of the container. Such a solution may be seen in EP 1 876 115 B1. One problem, especially with large containers and thus large and heavy lids, is that the opening force must overcome the weight of the lid. To take care of this problem, DE 20 2007 017 076 U1 disclose a solution where a gas spring is loaded (compressed) by the weight of the lid, which means a soft closing of the lid and an easier opening assisted by the spring force.

Another problem with closing of container lids is safety-related. Since the lid is very heavy, some kind of protection against unintentional closing or sudden fall-down of the lid must be added to the operating mechanism.

US 5,755,351 shows another type of container with a sliding and pivoting opening of the lid which is a complicated solution with many parts and which probably is very expensive. Other similar container types with a combined sliding and pivoting opening of the lid may have some kind of link arm solution for managing the combined sliding and pivoting motion.

There is a need of a cost efficient and easy handled solution for at least the two different container lid solutions presented above, the pivoting opening and the combined sliding/pivoting opening.

### Summary of the invention

It is an object of the invention to address at least some of the problems and issues outlined above. It is possible to achieve these objects and others by an operating mechanism for opening and closing of a container lid as defined in the attached independent claims.

According to an aspect of the invention, an operating mechanism for opening and closing of a container lid is disclosed. The operating mechanism is pivotally attached to a container and the container comprises a bottom, a front wall and a back wall, which are substantially parallel to each other. And further, the container comprises a first side wall and a second side wall, which are substantially parallel to each other and transverse relative the front and back wall and a top, which comprises an opening. The container lid is arranged to pivot around a pivot axis which is parallel to the front and back wall, and the container lid is arranged to cover the opening in a closed position and to expose the opening in a using position of the container. The operating mechanism is pivotally attached to one of the first and second side walls and is further pivotally connected to the lid either directly or indirectly via a link arm. The operating mechanism comprises a telescopic member which comprises a first tube with a lower end and an upper end, and a second tube with a lower end and an upper end, and the second tube is telescopically displaceable relative the first tube between a retracted position and an extended position. The operating mechanism further comprises a threaded rod which is rotatable around its own axis, and at least a part of the rod is arranged inside the first tube. The threaded rod is connected to the second tube by a threaded engagement, and the threaded engagement is arranged in a first support, which is fixedly arranged at the lower end of the second tube and the second tube is thereby movable along the rod upon rotation of the rod. The operating mechanism also comprises a drive unit which is connected to the rod and which is arranged to rotate the threaded rod. Further, the operating mechanism comprises a first spring arranged inside the first tube and around the threaded rod, and the first spring extends between the first support of the second tube and a second support arranged at the lower end of the first tube. The spring is arranged to be compressed when the second tube moves along the rod towards the retracted position of the telescopic member.

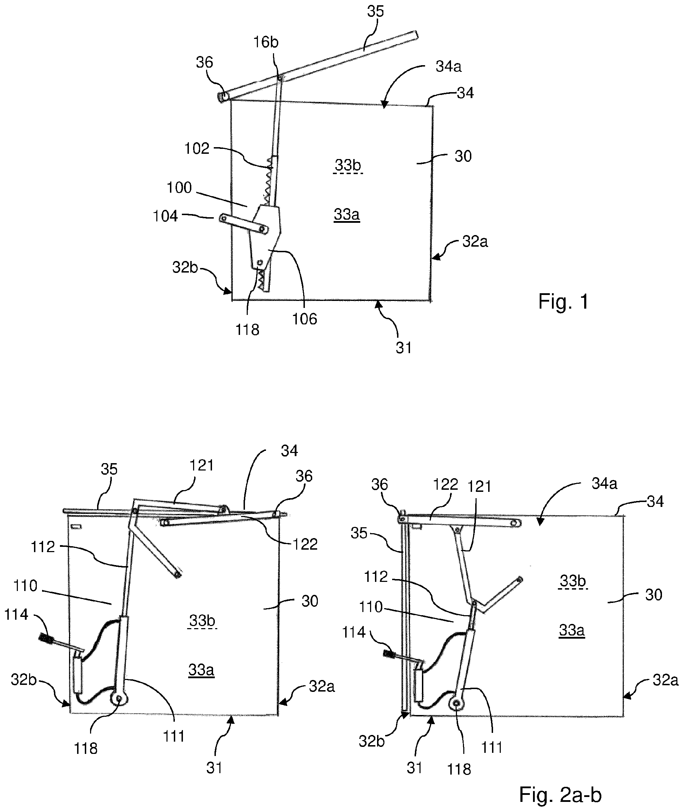

By this design, the operating mechanism is designed in such a way that when the telescopic member is retracted, for example when the container lid is closed or opened (depending on which type of lid, see description in relation to Fig. 1 and 2a-b below), the weight of the lid loads the spring. This means that when the telescopic member should be extended for the opening or closing of the lid (again depending on which type of lid), the rotating motion of the rotating rod, which drives the expansion/retraction of the telescopic member, may be driven by a very low force, due to that the weight of the lid is at least partially handled by the spring force of the spring. This means for example that, depending on the "designed" spring force of the spring, the lid may easily be opened by a hand driven motion of the rod or an electric motor driven by one or several batteries, preferably rechargeable batteries. The lifting force is by that similar with the force that is needed for rotating the rod, which is not known in prior art solutions. Further, since the first spring is arranged inside the first tube there is low risk of injuries, because of the enclosed solution for the spring. The threaded rod further provides a safe solution concerning the risk of an unintentional and sudden closing of the lid. In prior art solutions the lid may fall down with a great risk of injuries, which normally means that extra safety mechanisms must be added to protect the user of the container. In the inventive solution this problem is taken care of since the closing of the lid only is possible upon rotating the rod, which only is possible to perform with an active operation of an operator. A safer and more cost efficient solution with lower energy consumption compared to prior art solutions is hereby provided.

According to an embodiment, the first spring has a spring force adapted to take care of a substantial part of a force from the weight of the container lid. This means that the spring force is chosen so as to take care of at least a substantial part of the entire force from the weight of the lid, but preferably to take care of the entire force from the weight of the lid. Since the containers especially within the recycling area or waste handling area are big, the weight of the container lid is high. Since a standard container lid is very heavy and this together with the moment force from the weight acting on the operating device in prior art solutions, the required opening/lifting force may be about 10 kN. By adding a first spring and adopting the spring force/the first spring to take care of this weight, the opening and/or closing force may be kept much lower. For example, the force required by a handle or motor transferred to the threaded rod may be in the range 1 kN, instead of the "real" force - without spring - of about 10 kN (about 1000 kg).

According to an embodiment, the second support is a housing which is fixedly attached to the lower end of the first tube. The housing provides the function of being a support for the spring when compressed between the first support and the second support, as well as a function to enclose the drive unit and the connection between driving mechanism and the rod. Further, the housing may enclose other moving parts that need to be enclosed for safety and maintenance reasons.

According to an embodiment, the drive unit is connected to a first end of the rod via a bevel gear. Since the operating mechanism is arranged at one of the side walls of the container it may be convenient to have the drive unit or part of the drive unit accessible either from the side walls or from the front or rear wall. By having a bevel gear arranged at the end of the threaded rod it is possible to attach a motor or a handle via the bevel gear to the rod for transferring a rotating driving motion to the rod. By the bevel gear it is possible to have the drive unit accessible either from the side, the front or the back.

According to an embodiment, the bevel gear is arranged inside the housing. By such an arrangement, the bevel gear itself is protected from external damage as well as the operator of the opening/closing of the lid or the user of the container is protected from the moving parts of the bevel gear.

According to an embodiment, the drive unit is a handle. A handle is a simple, cost-efficient and often good enough solution for providing an opening and closing of a container lid. The handle may be arranged on the side wall or one of the front or back walls and preferably the rotating motion of the handle is transferred via a bevel gear to the rod.

According to an alternative embodiment, the drive unit is a motor. The motor is preferably an electric motor, but of course a pneumatic, hydraulic or combustion motor is also possible. Since the opening/closing force is very small the motor preferably is an electric motor which preferably is battery powered. Since the containers may be located on construction sites or recycling plants without a power supply and since the opening/closing normally is performed a few times per day, the battery solution is attractive and since the opening/closing force is low, the operating mechanism may be driven by for example one or two rechargeable screwdriver batteries or the like.

According to an embodiment, the second tube comprises a connector arm attached with a lower end to the upper end of the second tube and pivotally connected with an upper end to the lid or to a link arm. The length of the connector arm may be chosen to fit a proper location of the operating mechanism at the side wall, to enable a suitable height for the operator to use the operating mechanism and to keep the telescopic parts as short as possible.

According to an embodiment, the operating mechanism is pivotally attached to one of the first and second side walls by that the first tube comprises a pivot bracket which is arranged for connection to a corresponding pivot shaft arranged at the one of the first and second side walls on which the operating mechanism is arranged at. While opening or closing the lid, the operating mechanism need to pivot since the pivoting motion of the lid requires that also the operating mechanism pivots. Preferably, the entire operating mechanism is arranged as one unit, which is pivotally attached to the side wall which means that it is easy to provide the operating mechanism as an accessory. Thereby, a prior art container may be equipped with the pivot shaft, for example by welding such a shaft to the container side wall, and then also attach an inventive operating mechanism to the container.

According to an embodiment, the first support is a nut with an internal thread, which nut is arranged inside the second tube at the lower end of the same. The nut is fixedly attached to the lower end for example by welding and the internal thread of the nut act as the threaded engagement between the second tube and the threaded rod and the second tube is thereby movable along the rod upon rotation of the rod. Further, the nut acts as a support for the upper end of the first spring.

The embodiments presented above is suitable for a container lid which opens like "lying door" or "lying shutter", that is a hinge-like solution with the hinge (the pivot) near one of the long side walls, normally the back wall of the container. These embodiments disclose solutions where the closing of the lid normally leads to a compressed spring where the weight of the container lid loads the spring-force of the spring. Thereby, the opening of the lid is assisted by the spring-force such as the opening force more or less is the rotating force while rotating the rod.

Another type of container lid solution is where the opening/closing of the lid is both a sliding and pivoting motion. This normally is performed for example by that the lid firstly is lifted and slided horizontally to the back wall of the container and in this position, the lid is pivoted to a vertical position behind the back wall, and then slided vertically downwards behind the container back wall. In this alternative embodiment, the operating mechanism further comprises a second spring arranged inside the first tube and arranged around the rod. The second spring extends between the first support of the second tube and a third support arranged at the upper end of the first tube, such as the second spring is arranged to be compressed when the second tube moves along the rod towards the extended position of the telescopic member. This means that the first spring is a lower spring, and the second spring is an upper spring, seen in the assembled position of the operating mechanism on the side wall of the container. The first spring is as said above compressed when the telescopic member is retracted, and the second spring is compressed when the telescopic member is expanded. This also means that there is an equilibrium in the middle of the first tube, where the first and second springs are substantially unaffected, and the first support is at least near the middle of length of the first tube. This equilibrium corresponds substantially to the pivoting point between the horizontal sliding motion and the vertical sliding motion of the lid. By such a solution, it is possible to take care of both tensile forces and compressive forces from the weight of the container lid and which forces acting on the operating mechanism during the complete motion, which is not possible in prior art.

According to an embodiment, the second spring has a spring force adapted to take care of a substantial part of a force from the weight of the container lid. This means that the operating mechanism for opening and closing of a container lid also in this container lid solution can take care of the complete weight of the lid. In the same way as described above and according to the inventive idea, the only force needed to facilitate the opening and closing of the lid is the force for rotating the threaded rod. The same advantages regarding safety around the lid and the operating mechanism, low energy consumption, hand-operated or motor-operated drive etc., as described above are also applicable at this solution.

According to an embodiment, the first support is a plate comprises a through hole with an internal thread. Another option is that the plate comprises a nut with an internal thread which nut is arranged at the trough hole of the plate. The plate (first support) is fixedly attached at the lower end of the second tube and acts as support for an upper end of the first spring and as a support for a lower end of the second spring. The internal thread of the through hole in the plate, or the internal thread of the nut arranged at the through hole of the plate is the threaded engagement between the threaded rod and the first support. The plate and the second tube on which the plate is fixedly attach, is thereby movable along the rod upon rotating the rod, wherein the first spring is compressed upon the retracing motion and the second spring is compressed upon the expanding motion of the telescopic member.

According to an embodiment, the second spring is arranged around at least a part of the second tube. This means that the second tube is movable inside the second spring and in the most expanded position of the telescopic member, just the lower end of the second tube is inside the compressed second spring, and in the most retracted position of the telescopic member, a larger part of the second tube is inside the second spring.

According to an embodiment, the third support comprises a slide bearing. The slide bearing guides the second tube, preferably such as the second tube moves centrally inside the first tube and out from the first tube in the expansion motion. The slide bearing also seals around the second tube to prevent dirt from reaching the interior of the first tube and the springs. The slide bearing also protects the user from getting in contact with interior moving parts of the operating mechanism.

Further possible features and benefits of this solution will become apparent from the detailed description below.

### Brief description of drawings

The solution will now be described in more detail by means of exemplary embodiments and with reference to the accompanying drawings, in which:
Fig. 1 is a side view of a container with an operating mechanism for a first type of container lid solution according to a known art.
Fig. 2a-b are side views of a container with an operating mechanism for a second type of container lid solution according to a known art.
Fig. 3a is a side view of a container with the first type of container lid solution but with a first type of operating mechanism according to the invention, which operating mechanism is driven by a manpower via a handle.
Fig. 3b is a detailed view of the first type of operating mechanism for the first type of container lid solution shown in of Fig. 3a.
Fig. 4 is a detailed view of a second type of operating mechanism for the second type of container lid solution.

### Detailed description

Briefly described, an operating mechanism is disclosed, which comprises one or two springs for taking care of the weight of the lid or part of the weight for two different container lid solutions, which are common within the handling of waste material or recycle material.

Fig. 1a is side view of a container 30 with an operating mechanism 100 for a first type of container lid 35 according to a known art. The container 30 is a rectangular container and comprises a bottom 31, a front wall 32a, and a back wall 32b, which normally are parallel to each other, and further a first side wall 33a and a second side wall 33b (not visible) which are substantially parallel to each other and transverse relative the front and back wall 32a, 32b. The container lid 35 is arranged at a top 34 of the container 30, which top 34 comprises an opening 34a for receiving waste material or the like. The container lid 35 is arranged to pivot around a hinge like pivot axis 36 which is parallel to the front and back wall 32a, 32b, so as the lid 35 is openable from the front and the container lid 35 is arranged to cover the opening 34a in a closed position and to expose the opening 34a in a using position of the container 30. The lid 35 is openable and closable via a known operating device 100 which is pivotally attached with one (lower) end to a pivot 118 at one of the first and second side walls 33a, 33b as well as attach directly to the lid 35 with another (upper) end. The operating device 100 has a toothed shaft 102 and a gear 106, which comprises at least one gear wheel (not visible) for transferring a rotating motion of a drive unit in the form of a manually operated handle 104 to a linear motion of the toothed shaft 102. During the linear motion, the operating device 100 is pivotable around the pivot 118. One drawback with this prior art solution is that it is very heavy to open the lid 35, since the weight of the lid 35 acts directly at the operating device. Since this type of containers (waste and recycling area etc.) are large, the lid also is large and thereby is very heavy. A great force must be applied to open the lid 35. And opposite, the weight of the lid 35 becomes a problem while closing, since the closing might be uncontrolled and therefore some kind of automatic lock must be applied to this construction.

Fig. 2a-b are side views of a container 30 with an operating mechanism 110 for a second type of container lid 35 according to a known art, where in Fig 2a (to the left), the container lid 35 is fully closed and in Fig. 2b (to the right), the container lid 35 is fully opened. The operating mechanism 110 is in the example a double-acting hydraulic or pneumatic piston solution, operated by a drive unit in the form of a handle 114, which upon pumping builds up a pressure on one side of a piston (not visible) for expanding or retracing the operating mechanism 110. The shift between retracing and expanding the operating mechanism 110 is performed by shifting a valve (not visible) which directs the pressure to the lower or upper side of the piston for expansion alterantively retraction. The operating mechanism 110 comprises a first tube 111 (lower tube) and a second tube 112 (upper tube), wherein the second tube 112 is telescopically displaceable relative the first tube 111 between the retracted position and the extended position upon pumping with the handle 114, and the piston is arranged inside the first tube and also connected to the second tube 112. The extended position of the operating mechanism 110 is shown in Fig. 2a, which is the closed position of the lid 35 and the retracted position of the operating mechanism 110 is shown in Fig. 2b, which is the open position of the lid 35. The container 30 itself is about the same as described above, but the container lid 35 is opened and closed via a combined sliding and pivoting motion. This is performed by that the lid 35 firstly is lifted and slided horizontally towards the back wall 32b of the container 30 by that the second tube 112 moves towards the retracted position. The lid 35 is thereby gradually shifting from the horizontal position (closed position) to a vertical position (completely open position) behind the back wall 32b, by that the lid 35 is pivoted around a pivot 36. At the end of the opening motion, the lid 35 is slided vertically downwards behind the container back wall 32b. This is possible due to that the operating mechanism 110 is pivotally attached with one (lower) end to a pivot 118 at one of the first and second side walls 33a, 33b as well as attach indirectly to the lid 35 with another (upper) end via a link arm solution 121, 122. When the lid 35 changes from horizontal to vertical position, the weight from the lid 35 is transferred from the container top 34 to the operating device 110, which then has to cope with the full weight of the lid 35.

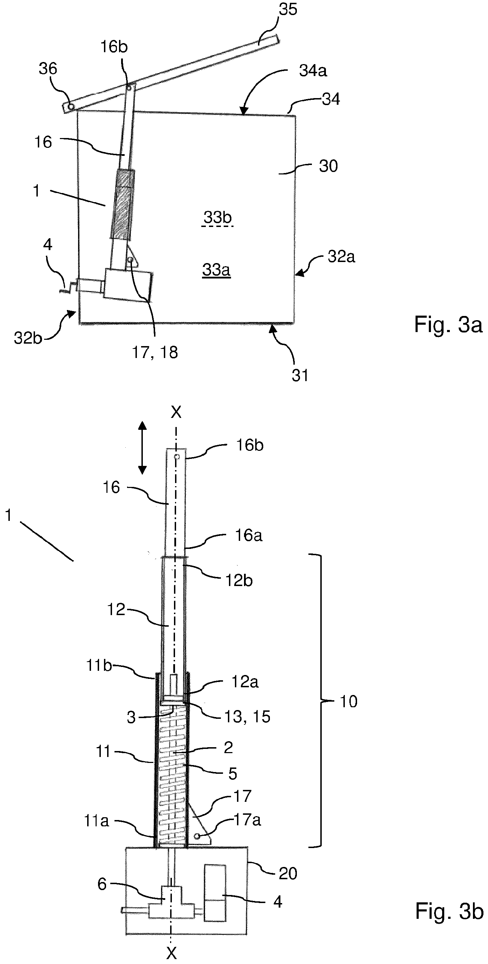

Fig. 3a is a side view of the container 30 with the first type of container lid solution but with a first type of operating mechanism 1 according to the invention. In the figure, the operating mechanism 1 is driven by a manpower via a handle 4. The container 30 comprises bottom 31, front and back walls 32a, 32b, which normally, but not necessary are parallel to each other, and further first and second side walls 33a, 33b. The second side wall 33b is not visible int the figure. The side walls 33a, 33b are normally substantially parallel to each other and transverse relative the front and back wall 32a, 32b. The container lid 35 is arranged at the top 34, which top 34 also comprises the opening. The container lid 35 is as explained before arranged to pivot around the hinge like pivot axis 36 which is parallel to the front and back wall 32a, 32b. The lid 35 is openable and closable via an inventive operating device 1 which is pivotally attached with one (lower) end, by means of a pivot bracket 17 with a hole 17a, to a pivot 18 arranged at the first side wall 33a. Further, the operating device 1 is pivotally attached to the lid 35 with an upper end 16b of a connector arm 16 (see also description below).

Fig. 3b is a detailed view of the first type of operating mechanism 1 for the first type of container lid solution shown in of Fig. 3a. The operating mechanism comprises a telescopic member 10 which in turn comprises a first tube 11 with a lower end 11 a and an upper end 11b, and a second tube 12 with a lower end 12a and an upper end 12b. The second tube 12 is telescopically displaceable relative the first tube 11 between a retracted position and an extended position. The second tube 12 comprises the connector arm 16 which is attached with a lower end 16a to the upper end 12b of the second tube 12 and which connector arm 16 further is pivotally connected with the upper end 16b to the lid 35 or to a link arm.

At least a part of a threaded rod 2 is arranged inside the first tube 11 and the rod 2 is rotatable around its axis X. The threaded rod 2 is connected to the second tube 12 by a threaded engagement 3 and the threaded engagement 3 is arranged in a first support 13, which is fixedly arranged at the lower end 12a of the second tube 12. The first support 13 with its threaded engagement 3 is in the preferred embodiment the same as a nut 15 with an internal thread, which nut 15 is arranged inside the second tube 12, at the lower end 12a of the same. By the threaded engagement 3 between the first support 13 and the threaded rod 2, the second tube 12 is movable along the rod 2 upon rotation of the rod 2. To facilitate the rotation of the rod 2, a drive unit 4 is connected to the rod 2, which drive unit 4 is arranged to rotate the threaded rod 2. In Fig. 3a, the drive unit 4 is a handle, but in Fig 3b, the drive unit 4 is a motor. The drive unit 4 (handle or motor) is indirectly coupled to the rod 2 via a bevel gear 6, which is attached to the drive unit 4 via gear rods and to the threaded rod 2, and the bevel gear 6 transfers a rotating motion from the drive unit 4 to a rotating motion of the threaded rod 2. When the threaded rod 2 rotates, the first support 13 moves along the rod 2 the axial direction X of the rod 2. By that, the telescopic member 10 expands or retraces, depending on the rotation direction.

A first spring 5 is arranged inside the first tube 11 and also arranged around the threaded rod 2. The first spring 5 extends between the first support 13 of the second tube 12 and a second support 20, which in the preferred embodiment is the same as a housing 20 arranged at the lower end 11a of the first tube 11. The bevel gear 6 and the motor (if a motor is used) is preferably located inside the housing 20, such as the moving parts of the bevel gear 6 are covered. Controls etc. may also be positioned inside the housing 20 if applicable. The spring 5 is arranged to be compressed when the second tube 12 moves along the rod 2 towards the retracted position of the telescopic member 10. The retracted position is when the second tube 12 is in its innermost position in the first tube 11, which means that the telescopic member 10 is in its shortest state. The first spring 5 has a spring force adapted to take care of a substantial part of the weight of the container lid 35, but more preferred the total weight of the lid 35. Since the operating device 1 is pivotally attached to the pivot 18 arranged at the first side wall 33a by means of the pivot bracket 17 and further is pivotally attached to the lid 35 with the upper end 16b of a connector arm 1, the complete operating device 1 with its housing 20 may pivot during the opening/closing motion.

When the telescopic member 10 is retracted, that is when the container lid 35 is closed, the first spring 5 is compressed and the weight of the lid 35 "loads" the first spring 5. This means that when the telescopic member 10 should be extended for the opening of the lid 35, the rotating motion of the rod 2 may be facilitated by a very low force, due to that the weight of the lid 35 is at least handled by the spring force of the first spring 5. Thus, the lid may easily be opened by a hand driven motion of the rod 2 with a drive unit 4 in the form of a handle. Another option is that an electric motor drives the rotating motion for example by one or several batteries, preferably rechargeable batteries like screwdriver batteries or the like. The lifting force is by that similar with the force that is needed for rotating the rod 2. As mentioned earlier, there is no need of any additional locking device or security device for preventing the lid 35 from falling down in an uncontrolled manner since the thread of the rod 2 only permits the lowering of the lid 35 upon rotation of the rod 2.

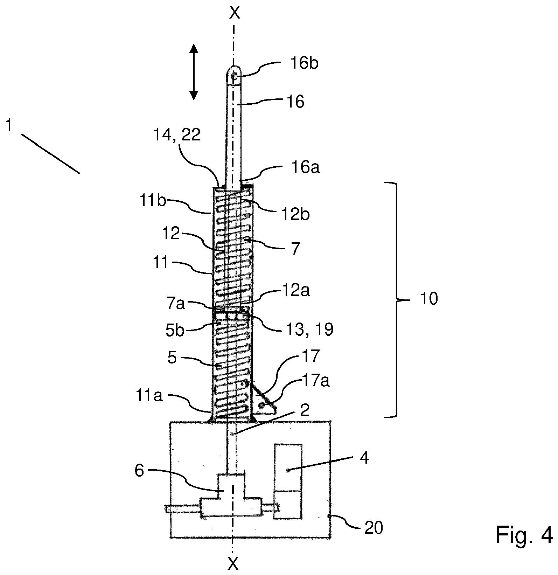

Fig. 4 is a detailed view of a second type of operating mechanism 1 for the second type of container lid solution, shown in Fig. 2a-b. In this embodiment, the operating mechanism 1 further comprises a second spring 7, also arranged inside the first tube 11 and around the threaded rod 2. The second spring 7 extends between the first support 13 of the second tube 12 and a third support 14, which is arranged at the upper end 11b of the first tube 11. The second tube 12 is according to the preferred embodiment a thinner tube compared to the first solution, and the second tube 12 is arranged inside the second spring 7, such as the second spring 7 encloses at least a part of the second spring 7, depending on in which extended or retracted state the telescopic member 10 is, and the second tube 12 is movable inside the second spring 7. In this case the first support 13 is a plate 19, which comprises a through hole with an internal thread or alternatively a plate with a nut which comprises an internal thread, and which nut is arranged at the trough hole of the plate 19. The plate 19 is fixedly attached at the lower end 12a of the second tube 12, but not inside the second tube 12 as in the first solution of the operating mechanism 1 for the first type of container lid 35. Both the first spring 5 and the second spring 7 is thereby arranged inside the first tube 11 and the plate 19 acts as support for an upper end 5b of the first spring 5 and as a support for a lower end 7a of the second spring 7. The first spring 5 is in the same way as for the first solution arranged to be compressed when the second tube 12 moves along the rod 2 towards the retracted position of the telescopic member 10. The second spring 7 is in turn arranged to be compressed when the second tube 12 moves along the rod 2 towards the extended position of the telescopic member 10. As mentioned above when describing the second type of container, with the combined sliding/pivoting opening motion, the container lid solution may comprise a link arm 121. The connector arm 16 of the operating mechanism 1 is pivotally connected to this link arm 121. During the opening motion of the lid 35, from a horizontal and closed state of the lid 35 to a vertical and open state of the lid 35 behind the back wall 32b of the container 30, the telescopic member 10 shifts from an extended position in the closed state of the lid 35 to a retracted position when container opening 24a is open and the lid 35 is vertically arranged behind the back wall 32b. This also means that there is an equilibrium state of the first and second spring 5, 7 near where the plate 19 preferably is near the middle of the length of the first tube 11, which equilibrium state occurs when the lid 35 pivots around the pivot axis 36. If there is a difference between the retrace force and the extension force (i.e. different spring forces between the first spring 5 and the second spring 7 or different types of springs etc.) depending on the link arm solution or other design issues, the plate 19 may not be in or near the middle of the length of the first tube 11 in the equilibrium state as in the preferred and described embodiment of Fig. 4. The second spring 7 has a spring force adapted to take care of a substantial part of the weight of the container lid 35, preferably the total weight of the container lid 35.

The third support 14 may comprise a slide bearing 22. The slide bearing 22 guides the second tube 12, preferably such as the second tube 12 moves centrally inside the first tube 11 and out from the first tube 11 in the extension motion. The slide bearing 22 also seals around the second tube 12 to prevent dirt from reaching the interior of the first tube 11 and the first and second springs 5, 7. In the same way as the first embodiment of the operating mechanism 1 with only the first spring 5, this second embodiment with two springs 5, 7 is attached as a complete unit with housing 20, bevel gear 6, a motor or a handle as driving unit 4, and the operating device 1 is in the same way pivotally attached to a pivot 18 arranged at the first side wall 33a by means of the pivot bracket 17 with a hole 17a.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein and are intended to be encompassed hereby.

## Claims

1. An operating mechanism (1) for opening and closing of a container lid (35) which is pivotally attached to a container (30), the container (30) comprising a bottom (31), a front wall (32a) and a back wall (32b) which are substantially parallel to each other, a first side wall (33a) and a second side wall (33b) which are substantially parallel to each other and transverse relative the front and back wall (32a, 32b), and a top (34) which comprises an opening (34a), and the container lid (35) is arranged to pivot around a pivot axis (36) which is parallel to the front and back wall (32a, 32b), and the container lid (35) is arranged to cover the opening (34a) in a closed position and to expose the opening (34a) in a using position of the container (30), and the operating mechanism (1) is pivotally attached to one of the first and second side walls (33a, 33b) and is further pivotally connected to the lid (35) either directly or indirectly via a link arm, the operating mechanism (1) comprising:
a telescopic member (10) comprising a first tube (11) with a lower end (11a) and an upper end (11b), and a second tube (12) with a lower end (12a) and an upper end (12b), and the second tube (12) is telescopically displaceable relative the first tube (11) between a retracted position and an extended position,
a threaded rod (2) rotatable around its axis (X) and at least a part of the rod (2) is arranged inside the first tube (11), and the threaded rod (2) is connected to the second tube (12) by a threaded engagement (3), the threaded engagement (3) is arranged in a first support (13) which is fixedly arranged at the lower end (12a) of the second tube (12), wherein the second tube (12) is movable along the rod (2) upon rotation of the rod (2),
a drive unit (4) connected to the rod (2) and arranged to rotate the threaded rod (2),
a first spring (5) arranged inside the first tube (11) and around the threaded rod (2), and extending between the first support (13) of the second tube (12) and a second support (20) arranged at the lower end (11a) of the first tube (11), wherein the spring (5) is arranged to be compressed when the second tube (12) moves along the rod (2) towards the retracted position of the telescopic member (10).

2. The operating mechanism (1) according to claim 1, wherein the first spring (5) has a spring force adapted to take care of a substantial part of a force from the weight of the container lid (35).

3. The operating mechanism (1) according to claim 1 or 2, wherein the second support (20) is a housing (20) which is fixedly attached to the lower end (11a) of the first tube (11).

4. The operating mechanism (1) according to any of the preceding claims, wherein the drive unit (4) is connected to a first end (2a) of the rod (2) via a bevel gear (6).

5. The operating mechanism (1) according to claim 4, wherein the bevel gear (6) is arranged inside the housing (20).

6. The operating mechanism (1) according to any of the preceding claims, wherein the drive unit (4) is a handle.

7. The operating mechanism (1) according to any of claims 1 - 5, wherein the drive unit (4) is a motor.

8. The operating mechanism (1) according to any of the preceding claims, wherein the second tube (12) comprises a connector arm (16) attached with a lower end (16a) to the upper end (12b) of the second tube (12) and pivotally connected with an upper end (16b) to the lid (35) or to a link arm.

9. The operating mechanism (1) according to any of the preceding claims, wherein the operating mechanism (1) is pivotally attached to one of the first and second side walls (33a, 33b) by that the first tube (11) comprises a pivot bracket (17) which is arranged for connection to a corresponding pivot shaft (18) arranged at the one of the first and second side walls (33a, 33b) on which the operating mechanism (1) is arranged at.

10. The operating mechanism (1) according to any of the preceding claims, wherein the first support (13) is a nut (15) with an internal thread, which nut (15) is arranged inside the second tube (12) at the lower end (12a).

11. The operating mechanism (1) according to any of the preceding claims, wherein the operating mechanism (1) further comprising a second spring (7) arranged inside the first tube (11) and around the rod (2), and extending between the first support (13) of the second tube (12) and a third support (14) arranged at the upper end (11b) of the first tube (11), wherein the second spring (7) is arranged to be compressed when the second tube (12) moves along the rod (2) towards the extended position of the telescopic member (10).

12. The operating mechanism (1) according to claim 11, wherein the second spring (7) has a spring force adapted to take care of a substantial part of a force from the weight of the container lid (35).

13. The operating mechanism (1) according to any of claims 1 - 9 or any of claims 11 - 12, wherein the first support (13) is a plate (19) comprising a through hole with an internal thread or a nut with an internal thread which nut is arranged at the trough hole, wherein the plate (19) is fixedly attached at the lower end (12a) of the second tube (12) and acts as support for an upper end (5b) of the first spring (5) and as a support for a lower end (7a) of the second spring (7).

14. The operating mechanism (1) according to any of claims 11 - 13, wherein the second spring (7) is arranged around at least a part of the second tube (12).

15. The operating mechanism (1) according to any of claims 11 - 14, wherein the third support (14) comprises a slide bearing (22).
